# EUROPÄISCHE PATENTSCHRIFT

(11) **EP 1 239 460 B1**
(45) Veröffentlichungstag und Bekanntmachung des Hinweises auf die Patenterteilung: **02.11.2006**
(21) Anmeldenummer: 02100146.6
(22) Anmeldetag: 19.02.2002
(51) Int. Cl.: G10L 15/22

(54) **Bereitstellen von Hilfe-Informationen in einem Sprachdialogsystem**
Providing help information in a speech dialogue system
Prestation d'informations d'aide dans un système de dialogue vocal

(30) Priorität: 07.03.2001 DE 10110977
(43) Veröffentlichungstag der Anmeldung: 11.09.2002
(73) Patentinhaber: SIEMENS AKTIENGESELLSCHAFT, 80333 München (DE)
(72) Erfinder: Caspari, Rudolf, 82223, Eichenau (DE)

(56) Entgegenhaltungen:
- WO-A-00/05643
- DE-C- 19 615 693
- M. HAMBLETON: "DIRECTING THE DIALOG: THE ART OF IVR" SPEECH TECHNOLOGY MAGAZINE, Februar 2000 (2000-02), Seiten 1-4, XP000931351

## Beschreibung

Die Erfindung betrifft ein Verfahren, ein Computerprogrammprodukt, einen Datenträger und eine Einrichtung zum Bereitstellen von Hilfe-Informationen für einen Benutzer in einem Sprachdialogsystem zum Bedienen einer Hintergrundapplikation.

Anwendungen bzw. Hintergrundapplikationen, wie zum Beispiel ein technisches Gerät der Unterhaltungselektronik, ein telefonisches Auskunftssystem (Bahn, Flug, Kino, etc..), ein computergestütztes Transaktionssystem (Homebanking-System, elektronische Warenbestellung, etc.) werden in zunehmendem Maße über ein Sprachdialogsystem als Zugangssystem (User Interface) bedient. Derartige Sprachdialogsysteme können in Hardware, Software oder einer Kombination daraus realisiert werden.

Damit ein Benutzer seine Anfragen in gesprochener natürlicher Sprache stellen kann, ist die Verwendung von Spracherkennern erforderlich. Spracherkennungsverfahren sind beispielsweise aus US 6 029 135, US 5 732 388, DE 196 36 739 C1, DE 197 19 381 C1 und DE 199 56 747 C1 bekannt. Diese verfügen jedoch häufig über einen stark restringierten Wortschatz.

Bei der Bedienung mittels Sprache treten daher folgende Probleme auf:
a) der Benutzer weiß nicht, was er sprechen darf und
b) der Benutzer kennt nicht das konzeptuelle Modell, auf dem die Hintergrundapplikation beruht.

Im Fall a) kommt es leicht zu Fehlerkennungen des Spracherkenners. Falls der Zugang zum System über geschriebene Sprache erfolgt, tritt dieser Nachteil nur dann auf, wenn das System versucht, alle Wörter der Eingabe zu interpretieren. Allerdings bietet der Zugang über gesprochene Sprache eine wesentlich attraktivere Benutzerschnittstelle, so dass das Problem in der Praxis eine große Rolle spielt.

Im Fall b) kann der Benutzer das System ohne vorheriges Studieren einer Bedienungsanleitung bestenfalls eingeschränkt benutzen. Eine Bedienungsanleitung muss aber nicht verfügbar sein, z.B. wenn sich der Benutzer über einen telefonischen Sprachdialog eine Information verschaffen möchte. Darüber hinaus ist das Lesen einer Bedienungsanleitung in jedem Fall mit erhöhtem Aufwand für den Benutzer verbunden. Dies vermindert insbesondere die Akzeptanz bei der Bedienung komplexer Systeme. Problem b) tritt auch auf, wenn der Zugang über geschriebene Sprache erfolgt.

Daher wurden verschiedene Hilfesysteme für Sprachdialogsysteme entwickelt.

IVR-(Interactive Voice Response)-Systeme bieten kontextsensitive Hilfe. Sie sind als Sprachmenüs nach folgendem Muster konstruiert:
- "Wenn sie A wollen, sagen Sie f(A).", wobei f(.) eine Funktion darstellt, z.B. eine, die die Zahlen einer Telefontastatur als Werte ausgibt.
- "Wenn Sie B wollen, sagen Sie f(B)."
- "Wenn Sie Y wollen, sagen Sie f(Y)."

In jeder Situation erhält der Benutzer einen Überblick über seine Möglichkeiten. Bei Auswahl einer der Möglichkeiten wechselt das System zur nächst tieferen Ebene und gibt dort wieder einen Überblick über die zur Verfügung stehenden Möglichkeiten.

Der Nachteil von IVR-Systemen besteht darin, dass sie zwar für einen ungeübten Benutzer akzeptabel sind, in jedem Fall aber zu langwierigen und umständlichen Dialogen führen, da die Dialog-Initiative in jedem Fall vom System ausgeht, was für geübte Benutzer nicht hinnehmbar ist. Die Benutzerführung ist starr.

Infolge der Unzulänglichkeiten der IVR-Systeme wurde die Dialogmaschine Diane entwickelt (DE 196 15 693 C1). Sie erlaubt einen Dialog mit gemischter Initiative. Diane geht davon aus, dass zunächst der Benutzer die Initiative besitzt. Ein geübter Benutzer kann einen gezielten Befehl erteilen oder eine gezielte Anfrage oder Hilfeanfrage stellen, ohne dass ihm seine Möglichkeiten vorher langwierig aufgezählt werden müssten. Auf diese Weise wird ein direkter Zugriff auf alle Möglichkeiten des Systems gewährleistet, insbesondere auch auf solche Hilfeangebote, die bei IVR-Systemen in tieferen Ebenen angesiedelt sind.

Ein Dialog wird nur erforderlich, wenn die Anfangsäußerung des Benutzers (i) unvollständig oder (ii) mehrdeutig ist oder (iii) im Widerspruch zu den Möglichkeiten der Hintergrundapplikation steht. Falls einer der genannten drei Fälle auftritt, ergreift Diane die Initiative und führt mit dem Benutzer einen Klärungsdialog, um die gewünschte Intention des Benutzers zu ermitteln und fehlende Wissenseinheiten zu erfragen.

Diane benutzt ein abstraktes Aufgabenmodell, welches auf folgenden Prinzipien beruht, die auch für die Einbeziehung eines Hilfesystems vorausgesetzt werden:
P1) Die Hintergrundapplikation kann aufgefasst werden als eine endliche Menge von Transaktionen T1, T2, .., Tn.
P2) Jede Transaktion hat einen Namen und besitzt eine endliche Menge (die auch leer sein kann) von Informationsparametern I1, I2, ..., Im. Diese Parameter müssen dem System bekannt sein, damit die Transaktion ausgeführt werden kann.
P3) Zu jedem Parameter gehört eine Grammatik, die dazu dient, den Parameter im Dialog zu erfassen.

Der Benutzer kann die gewünschte Transaktion und die dazugehörigen Parameter in einem Satz benennen oder nicht. Im ersten Fall kann die Transaktion sofort durchgeführt werden. Im zweiten Fall werden die noch unbekannten Parameter im Dialog erfasst.

Falls durch die Anfangsäußerung des Benutzers keine Transaktion eindeutig bestimmbar ist, führt das System automatisch einen Klärungsdialog zur Ermittlung der gewünschten Aktion durch. Gleiches gilt für unklare oder unvollständige Parametereingaben.

Zur Verdeutlichung betrachte man folgendes Beispiel: Die Hintergrundapplikation realisiert das folgende Aufgabenmodell, bestehend aus Transaktionen und den in Klammern aufgeführten Parametern:
- Zugauskunft (Startort, Zielort, Startzeit, Abfahrtsdatum)
- Flugauskunft (Startort, Zielort, Startzeit, Abfahrtsdatum)
- Geldüberweisung(Geldbetrag, Empfängerkonto, Empfänger Bank bzw. Bankleitzahl)
- Geldabhebung (Geldbetrag, Kontonummer, Bankleitzahl, PIN)
- Aktienkauf (Anzahl, Gesellschaft, Limit)
- Aktienverkauf (Anzahl, Gesellschaft, Limit)
- Senderaufnahme (Sender, Startzeit, Stopzeit)
- Sendungsaufnahme (Sendung, Datum)
- Anruf (Telefonnummer)

Die genannten drei Prinzipien führen bei dem Dialogsystem Diane zu folgenden Zuständen, in denen das System vom Benutzer eine Eingabe erwartet:
- Zustand a): Es ist noch keine Transaktion ausgewählt und die Transaktionen T1, T2, ..., Ti sind noch möglich.
- Zustand b): Das System hat eine Transaktion ausgewählt und erfragt vom Benutzer einen Parameterwert.
- Zustand c): Das System hat eine ja-nein-Frage gestellt.

Die Dialogmaschine Diane bietet jedoch keine kontextsensitive Hilfe.

In jüngster Zeit wurde die Sprache VoiceXML definiert, mit dem Ziel, das Telefon als natürlichsprachliche Zugangsmöglichkeit für Hintergrundapplikationen im Internet nutzen zu können.

VoiceXML erlaubt die natürlichsprachliche Navigation in Dokumenten, die über das Internet von einem Dokumentenserver zu Verfügung gestellt werden. Von einem Wurzeldokument ausgehend, kann der Benutzer in diesem Dokument einen Dialog führen oder per Sprachkommando zu anderen Dokumenten springen. In jedem auf diese Weise erreichten Dokument können dann Dialoge ablaufen, die auf Grammatiken beruhen, welche in diesem Dokument definiert sind.

Die Sprache VoiceXML bietet ferner ein Sprachkonstrukt für Hilfe. VoiceXML stellt Hilfetags zur Verfügung, bei denen der Programmierer an jeder Stelle im Dialog auf Hilfeanfragen des Benutzers reagieren kann. Diese Hilfe ist jedoch nur als Möglichkeit vorgesehen und nicht allgemein in das Bedienmodell integriert. Sie wird vom Programmierer direkt an der gewünschten Stelle in den Code integriert. Das führt dazu, dass das System die Hilfeanfragen des Benutzers nicht immer beantworten kann. Es besteht außerdem keine Verknüpfung zwischen den Hilfe-Prompts und den im Dialog verwendeten Grammatiken.

Nachteilig an der Sprache VoiceXML ist ferner, dass sie von Hand programmiert werden muss.

Daneben wurden sogenannte SpeechObjects entwickelt. Das sind wiederverwertbare, abgekapselte Dialogteile. Sie bestehen aus einer Grammatik zum Parsen des Benutzerinputs, Prompts für die Ausgabe und einer Ablauflogik. Sie werden dazu benutzt, um komplexere Dialoge aufzubauen. Mittels solcher SpeechObjects kann auch eine Hilfe von Hand programmiert werden. Dies erfordert jedoch einen hohen Programmieraufwand.

Aufgabe der Erfindung ist es, ein Hilfesystem zu schaffen, das den Benutzer bei der Bedienung eines Sprachdialogsystems zum Bedienen einer Hintergrundapplikation unterstützt.

Diese Aufgabe wird durch die unabhängigen Ansprüche gelöst. Vorteilhafte Weiterbildungen der Erfindung sind in den Unteransprüchen gekennzeichnet.

Ferner wird die Aufgabe durch ein Computerprogrammprodukt mit maschinenlesbarem Programmcode zur Durchführung des erfindungsgemäßen Verfahrens gelöst. Unter einem Computerprogrammprodukt wird dabei das Computerprogramm als handelbares Produkt verstanden, in welcher Form auch immer, z.B. maschinenlesbar auf Papier, auf einem computerlesbaren Datenträger, über ein Netz verteilt, etc.

Außerdem wird die Aufgabe durch einen Datenträger gelöst, auf dem ein Computerprogramm gespeichert ist, das nach einem Laden in den Hauptspeicher das erfindungsgemäße Verfahren ausführt.

Im Folgenden wird die Erfindung ausführlich erläutert.

Für eine Hintergrundapplikation, welche nach den oben genannten Prinzipien P1, P2, P3 modelliert ist und ein Dialogsystem, welches die oben genannten Zustände a), b), c) kennt, wird in einem ersten Schritt eine flache kontextsensitive Hilfe erzeugt.

Zunächst wird eine Hilfegrammatik definiert. Ein einfachstes Beispiel für eine Hilfegrammatik besteht beispielsweise darin, dass das Sprachdialogsystem z.B. die Äußerungen "Hilfe!", "Bitte helfen Sie mir." oder "Was kann ich tun?" versteht und mit einem Prompt, d.h. mit einer Aussage, antwortet. Allgemein gesprochen ist ein Prompt eine Antwort bzw. eine Äußerung des Systems. Die Prompts des Systems werden durch eine Hilfeanfrage auf Initiative des Benutzers ausgelöst.

Im Folgenden werden eine Reihe von Prompts definiert, die die Auswahl von Transaktionen oder die Eingabe von Parameterwerten unterstützen. Weiter unten werden Beispiele für die Verwendung der Prompts gegeben.

Für jede Transaktion definiert man einen Transaktionsprompt. Beispiele für Transaktionsprompts, d.h. von Hilfe-Aussagen (rechte Spalte) des Systems zu den einzelnen Transaktionen (linke Spalte), sind:
- Zugauskunft: "eine Zugauskunft einholen"
- Flugauskunft: "eine Flugauskunft einholen"
- Geldüberweisung: "Geld überweisen"
- Geldabhebung: "Geld abheben"
- Aktienkauf: "Aktien kaufen"
- Aktienverkauf: "Aktien verkaufen"
- Senderaufnahme: "einen Sender aufnehmen"
- Sendungsaufnahme: "eine Sendung aufnehmen"
- Anruf: "jemanden anrufen"

Die Transaktionsprompts bestehen also z.B. aus Objekt und Infinitiv.

Außerdem definiert man einen pauschalen Hilfeprompt. Beispiele für pauschale Hilfeprompts sind: "Sie können: ..." oder "Sagen Sie eine der folgenden Möglichkeiten: ...?", gefolgt jeweils von der Aufzählung aller Möglichkeiten, ausgedrückt durch die jeweiligen Transaktionsprompts. Die pauschalen Hilfeprompts bestehen also z.B. aus Subjekt und Modalverb.

Aus dem pauschalen Hilfeprompt und den Transaktionsprompts wird durch Hintereinanderschaltung ein vollständiger Satz mit Subjekt, Prädikat und Objekt erzeugt: "Sie können jemanden anrufen." Dabei wird das Prädikat aus der Kombination von Modalverb und Infinitiv gebildet.

Es wäre auch denkbar, auf den pauschalen Hilfeprompt zu verzichten und die Transaktionsprompts gleich in der Form "Sie können jemanden anrufen." zu definieren.

Für jeden Parameter einer Transaktion definiert man einerseits einen Parameterprompt, mit dem das System fehlende Werte für Parameter erfragt, z.B. "Wie lautet Ihr Abfahrtsort?" oder "Nennen Sie den Abfahrtstort."

Zusätzlich wird zu jedem Parameter ein Hilfeprompt definiert, und zwar entweder ein Parameter-Hilfeprompt oder ein Möglichkeitsprompt. Welcher Prompt definiert und gewählt wird, wird weiter unter im Detail erläutert.

Mittels des Möglichkeitsprompts werden alle möglichen Werte für den jeweiligen Parameter aufgezählt. Der Parameter-Hilfeprompt, andererseits, gibt an, in welcher Form der Benutzer einen Wert für den Parameter eingeben kann, um im Beispiel zu bleiben z.B.: "Nennen Sie als Abfahrtsort einen Ort in Deutschland."

Beispiele für Parameterprompts (rechte Spalte, jeweils erste Zeile) und für Parameter-Hilfeprompts (rechte Spalte, jeweils zweite Zeile) zu den einzelnen Parametern (linke Spalte) sind:
- Startort: "Wie lautet Ihr Abfahrtsort?"
"Nennen Sie als Abfahrtsort einen Ort in Deutschland."
- Startzeit: "Wann wollen Sie abfahren?"
"Sagen Sie die Abfahrtszeit, z.B. 17 Uhr 45."
- Geldbetrag: "Welchen Betrag wollen Sie überweisen?"
"Nennen Sie den zu überweisenden Betrag, z.B. 400 Euro 60."
- Kontonummer: "Wie lautet Ihre Kontonummer?" oder "Nennen Sie Ihre Kontonummer."
"Sagen Sie Ihre Kontonummer als Folge von Ziffern."
- Sender: "Welchen Fernsehsender wollen Sie aufnehmen?"
"Nennen Sie den Fernsehsender, den Sie aufnehmen wollen."
- Datum: "An welchem Tag läuft die Sendung?"
"Nennen Sie das Datum in folgendem Format:
z.B. 12. Februar."
- Anzahl Aktien: "Wie viel Stück?"
"Nennen Sie die Anzahl der Aktien, die Sie kaufen wollen in der Form einer natürlichen Zahl, z.B. 500."

Statt des Parameter-Hilfeprompts kann der Möglichkeitsprompt für die Parametereingabe definiert werden, mit dessen Hilfe die für den jeweiligen Parameter möglichen Parameterwerte aufgelistet werden. Der Möglichkeitsprompt lautet z.B.: "Sagen Sie eine der folgenden Möglichkeiten: ...". Gefolgt wird er von der Auflistung aller Möglichkeiten. Ein Beispiel für die Verwendung des Möglichkeitsprompts beim Aktienkauf, wenn als Parameter das Unternehmen, dessen Aktien gekauft werden sollen, eingegeben werden muss, ist: "Sagen Sie eine der folgenden Möglichkeiten: BASF, Siemens, Deutsche Bank, ...". Die Möglichkeiten werden aus der Grammatik der jeweiligen Parameter generiert (siehe unten).

Ferner definiert man einen ja-nein-Hilfeprompt. Ein Beispiel für einen ja-nein-Hilfeprompt ist: "Bitte beantworten Sie die Frage "...?" mit 'Ja' oder 'Nein'.", wobei die zuletzt gestellte Frage wiederholt wird.

Für Klärungsdialoge wird zusätzlich ein Frageprompt definiert. Dieser lautet z.B.: "Wollen Sie ...?" Wird er durch einen Transaktionsprompt ergänzt, ergibt sich ein vollständiger Satz mit Subjekt, Prädikat und Objekt: "Wollen Sie ein Zugauskunft einholen?"

Im folgenden wird der Einsatz der definierten Prompts geschildert.

Auf eine Anfrage des Systems an den Benutzer (z.B. "Sie wünschen?" nach dem Einschalt- bzw. Startvorgang, oder "Geben Sie bitte die Parameter (der ausgewählten Transaktion) an.") kann der Benutzer entweder einen geeigneten Befehl sprechen oder eine kontextsensitive Hilfe anfordern. Dazu äußert er eine der Formen, die von der Hilfegrammatik verstanden wird. Wenn die Benutzeräußerung durch die Hilfegrammatik erfasst wird, reagiert das System - das sich genau in einem der Zustände a), b) oder c) befindet - wie folgt:

### In Zustand a):

Ist noch keine Transaktion ausgewählt, so kann der Benutzer entweder eine Transaktion - gemäß der dafür vorgesehenen Grammatik - auswählen, oder Hilfe erfragen. Erfragt er Hilfe und sind die Transaktionen T1, T2, ..., Ti noch möglich, so reagiert das System mit der Ausgabe: "(Pauschaler Hilfeprompt): (Transaktionsprompt von T1), (Transaktionsprompt von T2), ..., (Transaktionsprompt von Ti)." Der pauschale Hilfeprompt "Sie können: ..." wird ergänzt durch die Auflistung der Transaktionsprompts. Im Zustand a) des Systems hört der Benutzer somit z.B.: "Sie können: eine Zugauskunft einholen, eine Flugauskunft einholen, Geld überweisen, Geld abheben, ...".

In Reaktion darauf äußert der Benutzer: "Eine Zugauskunft einholen" oder "Zugauskunft" oder jeden beliebigen anderen, grammatisch zulässigen Transaktionsaufruf. Ebenso gut kann er den Hilfeaufruf wiederholen, wenn ihm seine Entscheidung oder seine Möglichkeiten noch nicht klar sind.

In einem Klärungsdialog (gemäß DE 196 15 693 C1, s.o.) des Zustands a) des Systems nach einer unklaren Eingabe hört der Benutzer z.B. die Frage: "(Frageprompt) + (Transaktionsprompt)", wobei der Transaktionsprompt der vom System als am wahrscheinlichsten ermittelten Transaktion ausgegeben wird. Ein Beispiel lautet somit: "Wollen Sie eine Zugauskunft einholen?" Die Antwort des Benutzers darauf lautet "ja" / "ja bitte" / "nein" oder er äußert den Befehl: "Eine Zugauskunft einholen" oder "Zugauskunft" oder jeden beliebigen anderen, grammatisch zulässigen Transaktionsaufruf. Ebenso gut kann er einen Hilfeaufruf durchführen, wenn ihm seine Entscheidung oder seine Möglichkeiten noch nicht klar sind. Es werden dann alle zur Verfügung stehenden Transaktionen nach dem oben angegebenen Schema aufgezählt. In einer Variante des Klärungsdialogs weist das System - falls sich der Benutzer nicht äußert - nach einer kurzen Wartezeit auf andere mögliche Transaktionen hin.

Stehen nur sehr wenige Transaktionen zur Verfügung, so kann das System statt der Aufzählung der Möglichkeiten auch jeweils einen Ja/Nein-Dialog in der Form "(Frageprompt) + (Transaktionsprompt von Ti)" für jede mögliche Transaktion führen: "Wollen Sie eine Zugauskunft einholen?" Nach diesen Fragen wartet das System auf eine Antwort. Nach einer Weile ohne Antwort kann das System die nächste Transaktion durch eine Frage vorschlagen.

Ein Hilfeaufruf wird in dieser Situation durch einen ja-nein-Hilfeprompt beantwortet.

Damit das System nicht zu viele Möglichkeiten in der Form "(Frageprompt) + (Transaktionsprompt von Ti)" hintereinander ausgibt und anschließend auf eine Antwort wartet und dadurch den Benutzer ermüdet, wird die Anzahl der auf diese Weise hintereinander auszugebenden Möglichkeiten begrenzt. Dazu definiert man eine natürliche Zahl D, die als Dialogschwelle bezeichnet wird. Ein Vergleich der Anzahl der Möglichkeiten mit D entscheidet darüber, ob die zur Verfügung stehenden Möglichkeiten in der Form "(Frageprompt) + (Transaktionsprompt von Ti)" oder ob alle Möglichkeiten geschlossen mittels des pauschalen Hilfeprompts ("Sagen Sie eine der folgenden Möglichkeiten: ...") ausgegeben werden. Sinnvolle Werte für D sind etwa 2 oder 3. Liegen mehr als 2 oder 3 Möglichkeiten vor, so wird der pauschale Hilfeprompt gewählt.

### In Zustand b):

Der Benutzer hat eine Transaktion des Systems ausgewählt, z.B. Aktien kaufen. Nun erwartet das System vom Benutzer die Eingabe mindestens eines Parameterwerts. Der Benutzer kann z.B. sagen: "Ich möchte 200 Siemens Aktien kaufen.", womit er dem System zwei Parameter übergeben hat: den Namen des Unternehmens, dessen Aktien gekauft werden sollen, und die Anzahl der zu kaufenden Aktien.

Sollte die Eingabe von Parametern unklar sein, führt das System einen Klärungsdialog mit dem Benutzer durch (siehe DE 196 15 693 C1).

Äußert sich der Benutzer nicht innerhalb einer gewissen Zeit, so ergreift das System die Initiative und erfragt die Parameterwerte vom Benutzer mittels der Parameterprompts.

Der Benutzer spricht dann entweder den Parameterwert oder die Parameterwerte in der für diese Transaktion bzw. Parameter definierten Grammatik, oder er erfragt eine Hilfe zur Eingabe des Parameterwerts. Für die Erzeugung des Hilfeprompts gilt es, zwei Fälle zu unterscheiden:
Fall a): Die Parametergrammatik hat die Generierungseigenschaft, d.h. mit der Grammatik ist eine Liste aller Möglichkeiten für die Parametereingabe verknüpft, z.B. die Liste aller Unternehmen des DAX. Die Grammatik umfasst im einfachsten Fall also etwa die Liste "BASF, Siemens, Deutsche Bank, ...". (Je nach verwendetem Grammatikformalismus können die Möglichkeiten auch automatisch aus der Grammatik berechnet werden.) Das System äußert dann den Möglichkeitsprompt und listet alle Möglichkeiten auf, die sich aus der Grammatik ergeben. Im Beispiel des Aktienkaufs ergibt sich z.B. folgender Dialogausschnitt: (Parameterprompt:) "Von welcher Gesellschaft möchten Sie Aktien kaufen?", "Hilfe!", (Möglichkeitsprompt:) "Sagen Sie eine der folgenden Möglichkeiten: BASF, Siemens, Deutsche Bank, ...".
Fall b): Die Parametergrammatik hat nicht die Generierungseigenschaft, d.h. es ist praktisch unmöglich, alle Möglichkeiten für den benötigten Parameterwert aufzulisten. Ein Beispiel dafür ist die Uhrzeit. Das System äußert dann den Parameter-Hilfeprompt, z.B.: "Sagen Sie die Abfahrtszeit, z.B. 17 Uhr 45." Der Benutzer kann nun den Parameterwert in der Grammatik gemäß den vom System gegebenen Beispielen durch seine Sprache eingeben. Oder er wiederholt die Hilfeanfrage.

### In Zustand c):

Das System hat eine ja-nein-Frage gestellt und erwartet "Ja" oder "Nein" als Antwort des Benutzers. Hat der Benutzer die Orientierung verloren, kann er die Hilfe aufrufen. Das System äußert den ja-nein-Hilfeprompt unter Wiederholung der Frage. Anschließend kann der Benutzer antworten.

Von den IVR-Systemen ist das Prinzip bekannt, dem Benutzer an jeder Stelle des Dialogs Angaben über die zur Verfügung stehenden Möglichkeiten zu machen. Dieses Prinzip wird erfindungsgemäß mit einer Sprache verknüpft, die zur Modellierung der zugrundliegenden Hintergrundapplikation dient, indem die Sprache um Hilfeslots erweitert wird. Das System generiert dann aus den Hilfeslots und dem Kontextwissen die jeweils angemessene Hilfe.

Grundsätzlich kann man zwischen statischen und dynamischen Hilfesystemen unterscheiden. Statische Hilfesysteme (z.B. Microsoft Hilfe für Word) geben dem Benutzer Hilfe zu von ihm formulierten Themen. Sie sind nur benutzbar, falls der Benutzer das konzeptuelle Modell des Hintergrundsystems einigermaßen kennt, da er eine gezielte Frage stellen muss. Statische Hilfe kann in jeder Situation angefordert werden und liefert situationsunabhängig immer das gleiche Ergebnis, sofern die Anfrage sich nicht ändert.

Dynamische Hilfesysteme können unabhängig von statischen Hilfesystemen und gleichzeitig mit diesen existieren. Sie unterstützen den Benutzer während der Ablaufphase eines komplexen Bedienprozesses (der hier über einen Sprachdialog realisiert wird) in der jeweiligen Situation kontextabhängig. Charakteristisch ist hier, dass der Benutzer keine spezielle Frage stellt, sondern sich über die generelle Frage "Was ist möglich?" einen Überblick über die gerade gültigen Möglichkeiten verschaffen kann. Der Benutzer braucht kein konzeptuelles Modell der Aufgabe zu besitzen. Vielmehr erlernt er dieses, indem er über ein globales Hilfekommando die im jeweiligen Kontext gültigen Optionen vom System vermittelt bekommt.

Dynamische Hilfesysteme sind nur einsetzbar, wenn das System selbst zu jedem Zeitpunkt Zugriff auf das komplette Wissen hat, das zur Bedienung erforderlich ist und dieses Wissen auch hinreichend strukturiert ist.

Der vom System generierte Hilfemechanismus ist uniform und damit für den Endbenutzer leicht verstehbar. Ein globales Hilfekommando ist leicht erlernbar.

Bei dem erfindungsgemäßen Hilfesystem ist die Dialoginitiative gemischt. Der Benutzer kann sein Wissen über das System zur Beschleunigung der Bedienung nutzen und ermüdet nicht so schnell. Es ergeben sich daher Vorteile sowohl für den Endbenutzer des Systems als auch für den Systementwickler.

Die Vorteile für den Systementwickler liegen insbesondere darin, dass das Hilfesystem während der Systemerstellung automatisch aus den Spezifikationen erzeugt wird und nicht gesondert programmiert zu werden braucht. Der Systementwickler muss lediglich Hilfeprompts in vorgefertigte Hilfeslots einfügen. Dazu ist nur minimaler Aufwand erforderlich.

Durch die Definition von Grammatiken für Eingaben werden verschiedene sprachliche Eingaben für einen Befehl möglich. Das System wird flexibel hinsichtlich unterschiedlicher Ausdrucksweisen unterschiedlicher Benutzer.

Zum Navigieren, wenn der Benutzer zurück will oder die Orientierung völlig verloren hat, kann noch ein Befehl "Zurück!" vorgesehen werden, der das System dazu veranlasst, von Zustand c) in Zustand b) zurück oder von Zustand b) in Zustand a) zu wechseln.

Die beschriebene kontextsensitive Hilfe kann ferner hierarchisch strukturiert werden. Dies ist insbesondere hilfreich bei Systemen mit sehr vielen möglichen Transaktionen.

Eine derartige hierarchische Strukturierung erfolgt durch die Einführung von Subzuständen. Ein Subzustand hat einen Namen und besteht aus einer Menge von Transaktionen und - optional - aus einer Menge von weiteren Subzuständen. Zu jedem Subzustand definiert man wiederum einen Prompt und eine Grammatik.

Man betrachte die folgenden Beispiele: Der Subzustand Auskunft besteht aus den Transaktionen Zugauskunft und Flugauskunft. Der Prompt für den Subzustand Auskunft lautet: "eine Auskunft erhalten". Die Grammatik für den Subzustand Auskunft, d.h. die möglichen sprachlichen Formen für die Eingabe, lautet z.B.: "Auskunft", oder "Auskunft erhalten".

Ähnlich sieht es für den Subzustand finanzielle Transaktion aus. Er besteht aus dem Subzustand Aktienhandel und den Transaktionen Geldüberweisung und Geldabhebung. Der Prompt für den Subzustand finanzielle Transaktion lautet: "Homebanking durchführen". Die Grammatik für den Subzustand finanzielle Transaktion lautet z.B.: "Homebanking".

Der Subzustand Aktienhandel besteht aus den Transaktionen Aktienkauf und Aktienverkauf. Der Prompt für den Subzustand Aktienhandel lautet: "mit Aktien handeln". Die Grammatik für den Subzustand Aktienhandel lautet z.B.: "Aktie".

Die Subzustände sollten dabei so definiert sein, dass jede Transaktion in höchstens einem Subzustand vorkommt. Ferner sollen die Grammatiken nicht überlappen d.h. eine Grammatik soll nur auf einen Subzustand hinweisen, da es sonst keine eindeutige Zuordnung zwischen Benutzeräußerung und Subzustand gibt.

Eine Möglichkeit, Subzustände zu definieren, wird im Folgenden anhand der Figuren näher erläutert. Im einzelnen zeigt:
- Fig. 1: eine Menge von 21 Aktionen;
- Fig. 2: eine Zerlegung der Menge gemäß Fig. 1 in 6 Subzustände der Ebene 1;
- Fig. 3: eine Zerlegung der Menge gemäß Fig. 1 in Subzustände der Ebene 1 und Subzustände der Ebene 2; und
- Fig. 4: eine Zerlegung der Menge gemäß Fig. 1 in Subzustände der Ebenen 1, 2 und 3.

### Stufe 0:

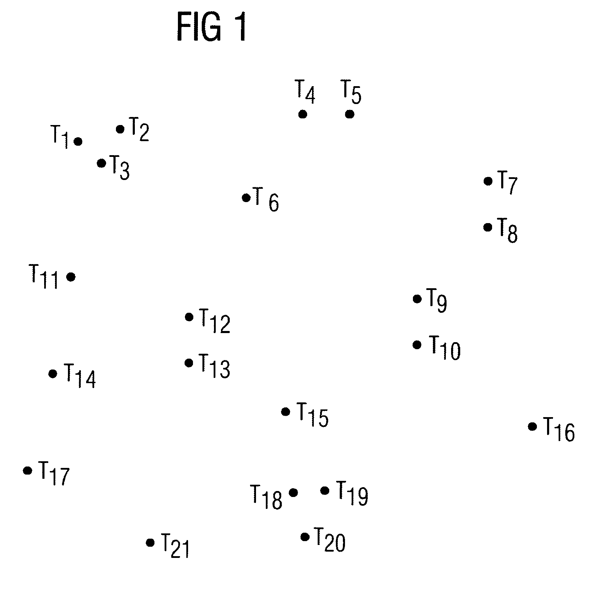

Man betrachte zunächst eine Anwendung A mit den Transaktionen T1, ..., Tm (Fig. 1).

Im Folgenden wird diese Anwendung sukzessive hierarchisch zergliedert, wobei ausgehend von der untersten Stufe 0 schrittweise höhere Gliederungsebenen gebildet werden.

### Stufe 1: Erzeugung von Subzuständen der Ebene 1:

Ist A11 eine Teilmenge von A mit mindestens 2 Elementen, so wird durch S11 := A11 ein Subzustand der Ebene 1 definiert. Ist A12 eine Teilmenge von A\A11 mit mindestens 2 Elementen, wobei "\" für die Exklusionsoperation "ohne" steht, so wird durch S12 := A12 ein weiterer Subzustand der Ebene 1 definiert.
Ist A1k eine Teilmenge von A\A11\A12\...\A1k-1 mit mindestens 2 Elementen, so wird durch S1k := A1k ein weiterer Subzustand der Ebene 1 definiert, wobei k eine natürliche Zahl ist.

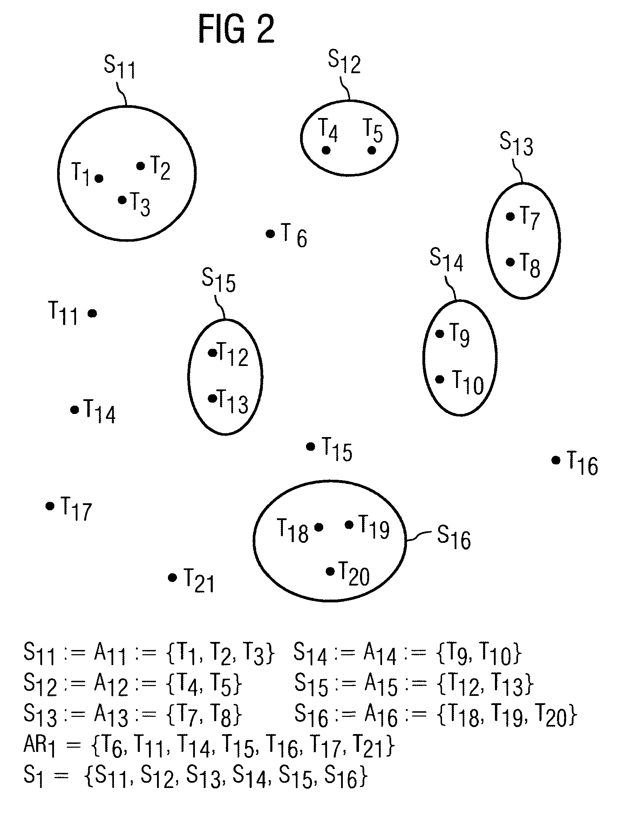

Die gesamte Anwendung zerfällt somit in eine Anzahl von Subzuständen der Ebene 1 und in Transaktionen, die in keinem Subzustand vorkommen. (s. Fig. 2), denn es gilt nach Konstruktion A = S11 U S12 U ... U S1k U A\A11\A12\...\A1k-1\A1k, wobei "U" für die Vereinigung zweier Mengen steht.

Wir definieren nun die Aktionenrestmenge der Stufe 1 AR1 := A\A11\A12\...\A1k-1\A1k und die Subzustandsmenge der Stufe 1 S1 := {S11, S12, ..., S1k}.

Durch die Einführung von Subzuständen hat man nun eine Sicht auf die Menge A gewonnen, in der sie als aus weniger Bestandteilen bestehend betrachtet werden kann, da jeder Subzustand jetzt nur noch als ein Bestandteil aufgefasst wird.

### Stufe 2: Erzeugung von Subzuständen der Ebene 2:

Ist A21 eine Teilmenge von AR1 und sub21 eine Teilmenge der in Stufe 1 gebildeten Subzustandsmenge S1 so wird durch S21 := sub21 U A21 ein Subzustand der Ebene 2 definiert, wenn diese Vereinigung mindestens 2 Elemente enthält.

Ist A22 eine Teilmenge von AR1\A21 und sub22 eine Teilmenge von S1\sub21 so wird durch S22 := sub22 U A22 ein Subzustand der Ebene 2 definiert, wenn diese Vereinigung mindestens 2 Elemente enthält.

Ist A21 eine Teilmenge von AR1\A21\A22\...\A21-1 und sub21 eine Teilmenge von S1\sub21\sub22\...\sub21-1, so wird durch S21 := sub21 U A21 ein Subzustand der Ebene 2 definiert, wobei 1 eine natürliche Zahl ist, wenn diese Vereinigung mindestens 2 Elemente enthält.

Wir definieren nun AR2 := AR1\A21\A22\...\A21-1\A21 als die Aktionenrestmenge der Stufe 2, SubR1 := S1\sub21\sub22\...\sub21-1\sub21 als die Subzustandsrestmenge der Stufe 1 und S2 := {S21, S22, ..., S21} die Subzustandsmenge der Stufe 2.

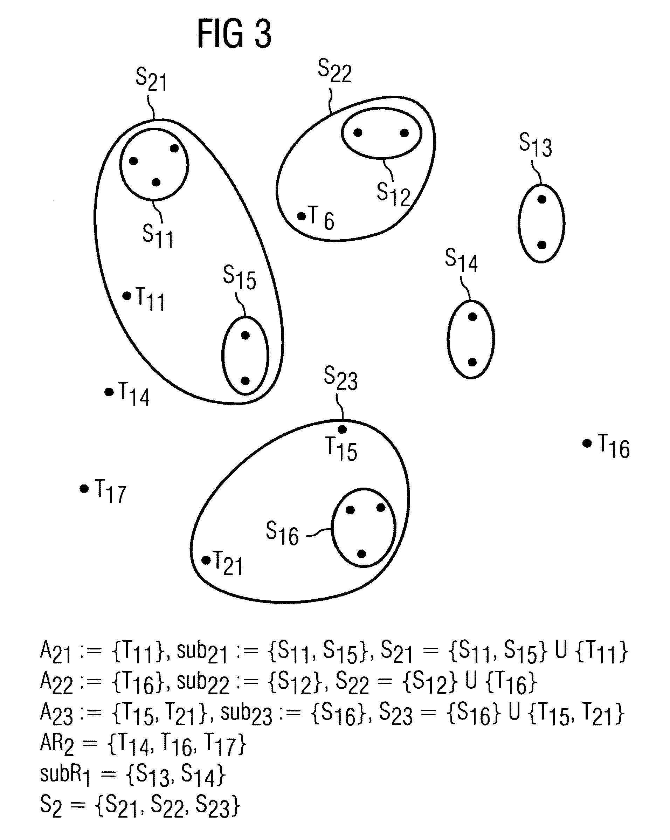

Die gesamte Anwendung zerfällt nun in eine gewisse Anzahl von Subzuständen der Ebene 2, eine gewisse Anzahl von Subzuständen der Ebene 1 und eine Restmenge von Aktionen, die keinem Subzustand angehören (s. Fig. 3).

Gegenüber der in Stufe 1 konstruierten Zerlegung von A hat die in Stufe 2 gebildete Zerlegung den Vorteil, dass sie gröber ist in dem Sinne, dass sie aus noch weniger Elementen besteht als die in Stufe 1 gebildete, da ein Subzustand der Ebene 2 jetzt nur noch als ein Bestandteil aufgefasst wird.

### Stufe m: Erzeugung von Subzuständen der Ebene m:

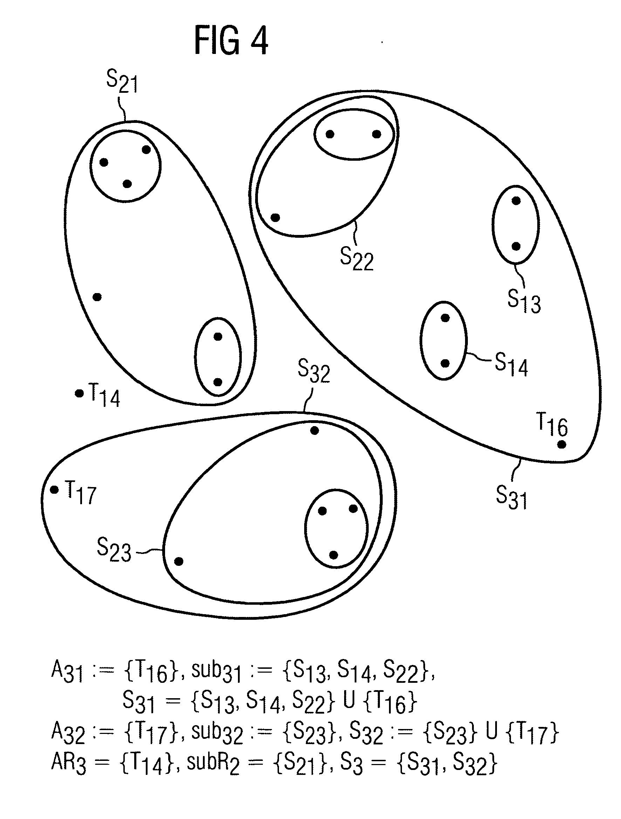

Das Verfahren wird iterativ fortgesetzt. Hat man schon Subzustände der Ebenen bis m-1 erzeugt und dabei Restmengen an unverbrauchten Aktionen und an unverbrauchten Subzuständen der Ebenen 1 bis m-2 erhalten, so kann man durch Zusammenfassen von Subzuständen der Ebenen m-1 und unverbrauchten Subzuständen der Ebenen m-2, m-3, ..., 1 und restlichen Aktionen neue Subzustände der Ebene m bilden, wobei man bei jeder solchen Bildung die Restmengen an Aktionen und Subzuständen der Ebenen 1, 2, ..., m-1 entsprechend verkleinert. Da sich bei jeder Zusammenfassung die Anzahl der Elemente verringern soll, müssen immer mindestens 2 Elemente zusammengefasst werden (s. Fig. 4 für m=3).

Das Verfahren kann nach Belieben nach jeder Ebene beendet werden und macht spätestens dann keinen Sinn mehr, wenn die Einteilung so grob ist, dass nur mehr 2 Elemente übrig geblieben sind.

Durch das Auferlegen einer hierarchischen Struktur wird der bisherige Zustand a) durch den neuen Zustand d) ersetzt, der da lautet: "Das System befindet sich in einem Subzustand".

### In Zustand d):

Das System befindet sich in einem Subzustand der Ebene n. Der Startzustand des Systems wird als Subzustand der Ebene m definiert, wobei m die größte natürliche Zahl ist, zu der noch ein Subzustand gebildet wurde. In Fig. 4 z.B. ist m = 3.

### Nun müssen zwei Fragen beantwortet werden:

Frage 1: Wie verhält sich das System bei Hilfeanforderung, wenn Situation d) vorliegt?

### Antwort:

Das System befinde sich in einem Subzustand der Ebene n. Dieser möge aus den Subzuständen S1n-1, ..., Sk(n-1)n-1 der Ebene n-1, den Subzuständen S1n-2, ..., Sk(n-2)n-2 der Ebene n-2, ..., den Subzuständen S11, ..., Sk(1)1 der Ebene 1 und einzelnen Transaktionen T1, ..., Tk(O) bestehen. Dabei ist k(.) eine Funktion, die zu jeder Zahl, welche die Ebene bedeutet, die Anzahl der zu dieser Ebenenzahl gehörenden Subzustände bestimmt.

Das System äußert dann:
"(Pauschaler Hilfeprompt):
(Prompt von S1n-1),
...,
(Prompt von Sk(n-1)n-1),
(Prompt von S1n-2),
...,
(Prompt von Sk(n-2)n-2),
(Prompt von S11),
...,
(Prompt von Sk(1)1),
(Prompt von T1),
...,
(Prompt von Tk(O))"

Frage 2: Wie gerät das System in einen Subzustand und welches Systemverhalten kennzeichnet den Subzustand?

*Ersteres geschieht, indem der Benutzer in der Ebene, in der der Subzustand definiert ist, eine Äußerung tätigt, welche durch die Grammatik analysiert wird und als Auswahl des Subzustands verstanden wird.*

Ist m die größte natürliche Zahl, zu der noch ein Subzustand gebildet wurde (Z.B. m = 3 in Fig. 4), so besteht der Anfangszustand des Systems aus Subzuständen bis maximal Ebene m und restlichen Aktionen. Wird nun die Äußerung des Benutzers durch die Grammatik eines Subzustand der Ebene n < m analysiert, so springt das System in diesen über.

Das Systemverhalten des dann erreichten Subzustand bzw. seiner Elemente ist dadurch gekennzeichnet, dass noch keine Transaktion ausgewählte wurde, jetzt aber nur noch die im Subzustand direkt oder in einem darunter liegenden Subzustand enthaltenen Transaktionen zur Verfügung stehen.

Wird durch eine Benutzeräußerung ein Subzustand erreicht, so äußert das System je nach Wert der oben erwähnten Dialogschwelle D die zur Verfügung stehenden Subzustände und Transaktionen nach dem oben beschriebenen Muster, d.h. entweder in der Form "(Pauschaler Hilfeprompt)" gefolgt von der Aufzählung der Transaktionsprompts oder durch "(Frageprompt) + (Transaktionsprompt von Ti)".

Das Verfahren des Auferlegens von Subzuständen ähnelt der Vorgehensweise der IVR-Systeme, jedoch ist im Unterschied zu diesen ein direkter Zugriff über mehrere Zwischenebenen hinweg möglich. Alle ursprünglichen Möglichkeiten des Systems bis zur direkten Angabe einer Transaktion mit ihren Parametern bleiben erhalten. Die Strukturierung mittels Subzuständen stellt lediglich eine Hilfestellung für ungeübte Benutzer dar.

Die Vorteile für den Benutzer liegen insbesondere darin, dass die Hintergrundapplikation durch die in die ursprünglich flache Struktur nachträglich eingebrachte hierarchische Strukturierung an Selbstbeschreibungsfähigkeit gewinnt. Bedienen ohne Bedienungsanleitung wird dadurch noch eher möglich.

Für ungeübte Benutzer ergibt sich der Vorteil, dass sich das System auf explizite Anforderung lokal wie ein IVR-System verhalten kann. Die Möglichkeiten des Benutzers auf direkten Zugriff bleiben jedoch erhalten. Damit entstehen Systeme, die von geübten und ungeübten Benutzern gleichermaßen gut bedient werden können.

Zum Navigieren kann wiederum der Befehl "Zurück" vorgesehen werden, der das System dazu veranlasst, von Zustand c) in Zustand b) zurück oder von Zustand b) in Zustand d), bei dem sich das System in einem Subzustand befindet, bzw. innerhalb des Zustands d) von einer Ebene in eine höhere Ebene zu wechseln.

Für die Dialogmaschine Diane wurde eine kontextsensitive Hilfe nach obiger Beschreibung implementiert. Wird als konkrete Anwendung die oben beschriebene Hintergrundapplikation benutzt, so könnten folgende Dialoge geführt werden (falls eine Dialogschwelle von D = 2 definiert wird):
- Dialog 1:: (zeigt den schrittweisen Abstieg in der Hierarchie. Der ungeübte Benutzer navigiert nur mit dem Hilfekommando bzw. äußert eine der vom System angebotenen Möglichkeiten)
- System:: Was kann ich für sie tun?
- Benutzer:: Hilfe!
- System:: Sie können eine Auskunft erhalten, Homebanking durchführen, einen Sender aufnehmen, eine Sendung aufnehmen, jemanden anrufen.
- Benutzer:: Homebanking.
- System:: Sie können mit Aktien handeln, Geld überweisen, Geld abheben.
- Benutzer:: Mit Aktien handeln.
- System:: Möchten Sie Aktien kaufen?
- Benutzer:: Nein.
- System:: Möchten Sie Aktien verkaufen?
- Benutzer:: Ja.
- System:: Wie viel Stück?

- Dialog 2:: (zeigt den direkten Zugriff. Der geübte Benutzer kennt die Möglichkeiten des Systems und kann sich direkt äußern)
- System:: Was kann ich für sie tun?
- Benutzer:: Ich möchte Aktien kaufen.
- System:: Wie viel Stück?

- Dialog 3:: (zeigt den Sprung auf einen Subzustand)
- System:: Was kann ich für sie tun?
- Benutzer:: Ich möchte Homebanking betreiben.
- System:: Sie können mit Aktien handeln, Geld überweisen, Geld abheben.
- Benutzer:: Ich möchte 200 Siemens Aktien kaufen.
- System:: Zu welchem Limit?

- Dialog 4:: (zeigt die Parameterhilfe, wenn die Parametergrammatik nicht die Generierungseigenschaft hat)
- System:: Was kann ich für sie tun?
- Benutzer:: Ich möchte 200 Siemens Aktien kaufen.
- System:: Zu welchem Limit?
- Benutzer:: Hilfe!
- System:: Sagen Sie einen Geldbetrag in Euro.

- Dialog 5:: (zeigt die Parameterhilfe, wenn die Parametergrammatik die Generierungseigenschaft hat)
- System:: Was kann ich für sie tun?
- Benutzer:: Ich möchte Aktien kaufen.
- System:: Wie viel Stück?
- Benutzer:: 100.
- System:: Von welcher Gesellschaft?
- Benutzer:: Hilfe!
- System:: Sagen eine der folgenden Möglichkeiten: Adidas, BASF, Bayer, Commerzbank, Deutsche Bank, Dresdner Bank, Epcos, ... (listet alle Möglichkeiten auf).

## Patentansprüche

1. Verfahren zum Bereitstellen von Hilfe-Informationen für einen Benutzer für ein Sprachdialogsystem zur Bedienung einer Hintergrundapplikation mit direktem Zugriff über mehreren Zwischenebenen,
wobei die Hintergrundapplikation nach folgenden Prinzipien modelliert ist:
P1) die Hintergrundapplikation kann als eine endliche Menge von Transaktionen T1, T2, ..., Tn aufgefasst werden;
P2) jede Transaktion besitzt eine endliche Menge von zur Ausführung der Transaktion benötigten Parametern;
P3) zu jedem Parameter gehört eine Grammatik, die dazu dient, den Parameter im Dialog zu erfassen;
wobei das Sprachdialogsystem die folgenden Zustände einnehmen kann:
Zustand a): es ist noch keine Transaktion ausgewählt und die Transaktionen T1, T2, ..., Ti sind noch möglich;
Zustand b): es wurde eine Transaktion ausgewählt, es wurden aber noch nicht alle Parameterwerte zu dieser Transaktion eingegeben;
wobei für jede Transaktion ein Transaktionsprompt gespeichert wird;
wobei für jeden Parameter ein Hilfeprompt gespeichert wird;
wobei ein globales Hilfekommando zum Aufrufen einer Hilfe gespeichert wird;
wobei das Sprachdialogsystem nach Erkennen des globalen Hilfekommandos die im jeweiligen Zustand und Kontext gültigen Optionen durch die gespeicherten Prompts ausgibt,
wobei im Zustand a) mindestens ein Transaktionsprompt ausgegeben wird; und
wobei im Zustand b) mindestens ein Hilfeprompt ausgegeben wird,
**dadurch gekennzeichnet,**
**dass** zur hierarchischen Strukturierung der Hilfe Subzustände definiert sind, denen Transaktionen oder Transaktionen und weitere Subzustände zugeordnet sind;
**dass** das Sprachdialogsystem beim Aufruf des globalen Hilfekommandos die im jeweiligen Zustand zur Verfügung stehenden Subzustände und Transaktionen entweder in der Form Hilfeprompt gefolgt von der Aufzählung der Transaktionsprompts oder durch Frageprompt und Transaktionsprompt als Hilfe äußert.

2. Verfahren nach Anspruch 1,
**dadurch gekennzeichnet,**
**dass** der für jeden Parameter gespeicherte Hilfeprompt entweder alle möglichen Werte dieses Parameters aufzählt oder die Form angibt, in der ein Wert für den Parameter einzugeben ist.

3. Verfahren nach Anspruch 1 oder 2,
**dadurch gekennzeichnet,**
**dass** im Zustand a)
- entweder alle möglichen Transaktionen unter Ausgabe der jeweiligen Transaktionsprompts ausgegeben werden,
- oder der Benutzer mittels einer mit ja oder nein zu beantwortenden Frage unter Ausgabe des jeweiligen Transaktionsprompts für jede zur Verfügung stehende Transaktion einzeln gefragt wird, ob er diese Transaktion ausführen will, wobei der Benutzer, in dem Zustand des Systems, in dem das System auf eine Antwort auf die ja-nein-Frage wartet, als Antwort auf das globale Hilfekommando einen Hinweis zur Beantwortung der ja-nein-Frage erhält.

4. Verfahren nach mindestens einem der vorhergehenden Ansprüche,
**dadurch gekennzeichnet,**
**dass** ein pauschaler Hilfeprompt gespeichert wird; und
**dass** der Benutzer durch Äußern des globalen Hilfekommandos die im Zustand a) gültigen Optionen vom Sprachdialogsystem durch eine Kombination des pauschalen Hilfeprompts und der Transaktionsprompts vermittelt bekommt.

5. Verfahren nach mindestens einem der vorhergehenden Ansprüche,
**dadurch gekennzeichnet,**
**dass** ein Möglichkeitsprompt gespeichert wird, welcher dazu dient, alle im jeweiligen Kontext des Zustands b) möglichen Werte für den jeweiligen Parameter aufzuzählen.

6. Verfahren nach mindestens einem der vorhergehenden Ansprüche,
**dadurch gekennzeichnet,**
**dass** für jede mögliche Eingabe eine Grammatik gespeichert wird.

7. Verfahren nach mindestens einem der vorhergehenden Ansprüche,
**dadurch gekennzeichnet,**
**dass** die zur Verfügung stehenden Transaktionen hierarchisch geordnet werden.

8. Anordnung zum Bereitstellen von Hilfe-Informationen für einen Benutzer für ein Sprachdialogsystem zum Bedienen einer Hintergrundapplikation mit direktem Zugriff über mehreren Zwischenebenen,
wobei die Hintergrundapplikation nach folgenden Prinzipien modelliert ist:
P1) die Hintergrundapplikation kann als eine endliche Menge von Transaktionen T1, T2, ..., Tn aufgefasst werden;
P2) jede Transaktion besitzt eine endliche Menge von zur Ausführung der Transaktion benötigten Parametern;
P3) zu jedem Parameter gehört eine Grammatik, die dazu dient, den Parameter im Dialog zu erfassen;
wobei das Sprachdialogsystem die folgenden Zustände einnehmen kann:
Zustand a): es ist noch keine Transaktion ausgewählt und die Transaktionen T1, T2, ..., Ti sind noch möglich;
Zustand b): es wurde eine Transaktion ausgewählt, es wurden aber noch nicht alle Parameterwerte zu dieser Transaktion eingegeben;
mit
Mitteln zum Speichern jeweils eines Transaktionsprompts in Zuordnung zu jeder Transaktion;
Mitteln zum Speichern jeweils eines Hilfeprompts in Zuordnung zu jedem Parameter;
Mitteln zum Erkennen eines globalen Hilfekommandos;
Mitteln zum Ausgeben der im jeweiligen Zustand und Kontext gültigen Optionen mittels der gespeicherten Prompts in Abhängigkeit vom Erkennen des globalen Hilfekommandos,
wobei die Mittel zum Ausgeben derart ausgebildet sind, dass sie im Zustand a) mindestens einen Transaktionsprompt ausgeben; und
wobei die Mittel zum Ausgeben derart ausgebildet sind, dass sie im Zustand b) mindestens einen Hilfeprompt ausgeben,
**dadurch gekennzeichnet,**
**dass** die Anordnung so eingerichtet ist,
**dass** zur hierarchischen Strukturierung der Hilfe Subzustände definiert sind, denen Transaktionen oder Transaktionen und weitere Subzustände zugeordnet sind;
**dass** das Sprachdialogsystem beim Aufruf des globalen Hilfekommandos die im jeweiligen Zustand zur Verfügung stehenden Subzustände und Transaktionen entweder in der Form Hilfeprompt gefolgt von der Aufzählung der Transaktionsprompts oder durch Frageprompt und Transaktionsprompt als Hilfe äußert.

## Claims

1. Method for providing help information for a user for a speech dialog system for operating a background application with direct access via a plurality of intermediate levels,
the background application being modeled on the following principles:
P1) the background application can be interpreted as a finite set of transactions T1, T2, ..., Tn;
P2) each transaction has a finite set of parameters required to execute the transaction;
P3) belonging to each parameter is a grammar that serves for acquiring the parameter in the dialog;
it being possible for the speech dialog system to assume the following states:
state a): no transaction has yet been selected, and the transactions T1, T2, ..., Ti are still possible;
state b): a transaction has been selected, but not all parameter values relating to this transaction have yet been input;
a transaction prompt being stored for each transaction;
a help prompt being stored for each parameter;
a global help command for calling a help being stored; and,
after detection of the global help command, the speech dialog system outputting through the stored prompts the options valid in the respective state and context,
at least one transaction prompt being output in the state a); and
at least one help prompt being output in the state b),
**characterized in that**, for hierarchical structuring of the help, substates are defined, to which transactions or transactions and further substrates are assigned; and
**in that**, when calling the global help command, the speech dialog system utters as help the substates and transactions available in the respective state either in the form of help prompt followed by the enumeration of the transaction prompts or by question prompt and transaction prompt.

2. Method according to Claim 1, **characterized in that** the help prompt stored for each parameter either enumerates all possible values of this parameter or specifies the form in which a value for the parameter is to be input.

3. Method according to Claim 1 or 2, **characterized in that** in the state a)
- either all possible transactions are output subject to output of the respective transaction prompts,
- or, by means of a question to be answered with yes or no and subject to output of the respective transaction prompt, the user is asked individually for each available transaction whether he wishes to execute this transaction, the user receiving an indication for answering the yes/no question as response to the global help command in the state of the system in which the system is waiting on an answer to the yes/no question.

4. Method according to at least one of the preceding claims, **characterized in that** a global help prompt is stored; and **in that** by uttering the global help command the user is conveyed the options of the speech dialog system that are valid in state a) by a combination of the global help prompt and the transaction prompt.

5. Method according to at least one of the preceding claims, **characterized in that** an option prompt is stored which serves for enumerating all values for the respective parameter that are possible in the respective context of the state b).

6. Method according to at least one of the preceding claims, **characterized in that** a grammar is stored for each possible input.

7. Method according to at least one of the preceding claims, **characterized in that** the available transactions are hierarchically ordered.

8. Arrangement for providing help information for a user for a speech dialog system for operating a background application with direct access via a plurality of intermediate levels,
the background application being modeled on the following principles:
P1) the background application can be interpreted as a finite set of transactions T1, T2, ..., Tn;
P2) each transaction has a finite set of parameters required to execute the transaction;
P3) belonging to each parameter is a grammar that serves for detecting the parameter in the dialog;
it being possible for the speech dialog system to assume the following states:
state a): no transaction has yet been selected, and the transactions T1, T2, ..., Ti are still possible;
state b): a transaction has been selected, but not all parameter values relating to this transaction have yet been input;
having
means for storing in each case one transaction prompt assigned to each transaction;
means for storing in each case one help prompt assigned to each parameter;
means for detecting a global help command;
means for outputting the options, valid in the respective state and context, by means of the stored prompt as a function of the detection of the global help command,
the means for outputting being designed in such a way that they output at least one transaction prompt in the state a); and
the means for outputting being designed in such a way that they output at least one help prompt in the state b),
**characterized in that** the arrangement is set up such that, for hierarchical structuring of the help, substates are defined, to which transactions or transactions and further substrates are assigned; and
such that, when calling the global help command, the speech dialog system utters as help the substates and transactions available in the respective state either in the form of help prompt followed by the enumeration of the transaction prompts or by question prompt and transaction prompt.

## Revendications

1. Procédé pour mettre à disposition d'un utilisateur des informations d'aide pour un système de dialogue vocal en vue de l'utilisation d'une application d'arrière-plan à accès direct sur plusieurs niveaux intermédiaires,
dans lequel ladite application d'arrière-plan est modélisée selon les principes suivants :
P1) l'application d'arrière-plan peut être comprise comme un ensemble fini de transactions T1, T2, ..., Tn ;
P2) chaque transaction possède un ensemble fini de paramètres nécessaires à l'exécution de la transaction ;
P3) à chaque paramètre appartient une grammaire qui sert à détecter le paramètre dans le dialogue ;
dans lequel ledit système de dialogue vocal peut prendre les états suivants :
état a): aucune transaction n'est encore sélectionnée et les transactions T1, T2, ..., Ti sont encore possibles ;
état b): une transaction a été sélectionnée mais toutes les valeurs des paramètres pour cette transaction n'ont pas encore été introduites ;
dans lequel on enregistre pour chaque transaction un prompt de transaction ;
dans lequel on enregistre pour chaque paramètre un prompt d'aide ;
dans lequel on enregistre une commande d'aide globale pour appeler une aide;
dans lequel le système de dialogue vocal, après avoir reconnu la commande d'aide globale, délivre les options valables dans l'état et le contexte respectifs, grâce aux prompts enregistrés,
dans lequel, dans l'état a), au moins un prompt de transaction est délivré ; et
dans lequel, dans l'état b), au moins un prompt d'aide est délivré,
**caractérisé en ce que**
pour structurer hiérarchiquement l'aide, des sous-états sont définis auxquels sont attribuées des transactions ou des transactions et d'autres sous-états ;
**en ce que** le système de dialogue vocal, à l'appel de la commande d'aide globale, prononce comme aide les sous-états et transactions disponibles dans l'état respectif, soit sous la forme du prompt d'aide suivi de l'énumération des prompts de transaction, soit par un prompt d'interrogation et un prompt de transaction.

2. Procédé selon la revendication 1,
**caractérisé en ce que**
le prompt d'aide enregistré pour chaque paramètre énumère toutes les valeurs possibles de ce paramètre ou bien donne la forme sous laquelle il faut introduire une valeur pour le paramètre.

3. Procédé selon la revendication 1 ou 2,
**caractérisé en ce que**
dans l'état a)
- soit toutes les transactions possibles sont délivrées en délivrant les prompts de transaction respectifs,
- soit il est demandé individuellement à l'utilisateur à l'aide d'une question à laquelle il faut répondre par oui ou par non, en délivrant le prompt de transaction pour chaque transaction disponible, s'il veut exécuter cette transaction, l'utilisateur recevant dans l'état du système dans lequel le système attend une réponse à la question oui/non, comme réponse à la commande d'aide globale une information lui permettant de répondre à la question oui/non.

4. Procédé selon au moins l'une des revendications précédentes,
**caractérisé en ce que**
on enregistre un prompt d'aide global ; et **en ce que** l'utilisateur, en prononçant la commande d'aide globale, se voit communiquer les options valables dans l'état a) par le système de dialogue vocal, grâce à une combinaison du prompt d'aide global et des prompts de transaction.

5. Procédé selon au moins l'une des revendications précédentes,
**caractérisé en ce que**
on enregistre un prompt de possibilité qui sert à énumérer toutes les valeurs possibles pour le paramètre respectif dans le contexte respectif de l'état b).

6. Procédé selon au moins l'une des revendications précédentes,
**caractérisé en ce que**
on enregistre une grammaire pour chaque introduction possible.

7. Procédé selon au moins l'une des revendications précédentes,
**caractérisé en ce que**
on classe hiérarchiquement les transactions disponibles.

8. Ensemble pour mettre à disposition d'un utilisateur des informations d'aide pour un système de dialogue vocal en vue de l'utilisation d'une application d'arrière-plan à accès direct sur plusieurs niveaux intermédiaires,
dans lequel ladite application d'arrière-plan est modélisée selon les principes suivants :
P1) l'application d'arrière-plan peut être comprise comme un ensemble fini de transactions T1, T2, ..., Tn ;
P2) chaque transaction possède un ensemble fini de paramètres nécessaires à l'exécution de la transaction ;
P3) à chaque paramètre appartient une grammaire qui sert à détecter le paramètre dans le dialogue ;
dans lequel ledit système de dialogue vocal peut prendre les états suivants :
état a): aucune transaction n'est encore sélectionnée et les transactions T1, T2, ..., Ti sont encore possibles ;
état b): une transaction a été sélectionnée mais toutes les valeurs des paramètres pour cette transaction n'ont pas encore été introduites ;
comprenant
des moyens pour enregistrer respectivement un prompt de transaction pour chaque transaction ;
des moyens pour enregistrer respectivement un prompt d'aide pour chaque paramètre ;
des moyens pour reconnaître une commande d'aide globale ;
des moyens pour délivrer les options valables dans l'état et le contexte respectifs au moyen des prompts enregistrés, en fonction de la reconnaissance de la commande d'aide globale,
les moyens de délivrance étant réalisés de telle manière qu'ils délivrent dans l'état a) au moins un prompt de transaction ; et
les moyens de délivrance étant réalisés de telle manière qu'ils délivrent dans l'état b) au moins un prompt d'aide,
**caractérisé en ce que**
l'ensemble est configuré de telle manière
que pour structurer hiérarchiquement l'aide, des sous-états sont définis auxquels sont attribuées des transactions ou des transactions et d'autres sous-états ;
que le système de dialogue vocal, à l'appel de la commande d'aide globale, prononce comme aide les sous-états et transactions disponibles dans l'état respectif, soit sous la forme du prompt d'aide suivi de l'énumération des prompts de transaction, soit par un prompt d'interrogation et un prompt de transaction.
